# EUROPEAN PATENT APPLICATION

(11) **EP 2 253 387 A1**
(43) Date of publication of application: **24.11.2010**
(21) Application number: 09160551.9
(22) Date of filing: 18.05.2009
(51) Int. Cl.: B05D 1/18, B05D 7/14

(54) **A system for a controlled self-assembled layer formation on metal**

(71) Applicant: NXP B.V., 5656 AG Eindhoven (NL)
(72) Inventor: Furukawa, Yukiko, 5656 AE Eindhoven (NL); van der Heuvel, Cees, 5656 AE Eindhoven (NL)
(74) Representative: Schouten, Marcus Maria

(57) **Abstract**

A method for manufacturing a self-assembled layer (109) on a metal substrate (103), the method comprising providing the metal substrate (103), providing a solvent (105), providing a precursor (107) for the self-assembled layer (109), preparing a mixture (112) of the precursor (107) and the solvent (105), contacting (102) the metal substrate (103) with the mixture (112), and forming (104, 106) the self-assembled layer (109) with controllable material properties on a surface of the metal substrate (103) based on the precursor (107), wherein the metal substrate (103) is configured for being ionized upon interacting with the mixture (112) of the precursor (107) and the solvent (105).

## Description

### FIELD OF THE INVENTION

The invention relates to a method for manufacturing a self-assembled layer on a metal substrate.

The invention further relates to an arrangement of a self-assembled layer on a metal substrate.

The invention also relates to an apparatus for manufacturing a self-assembled layer on a metal substrate.

### BACKGROUND OF THE INVENTION

Self-assembled monolayer (SAM) may be denoted as an organized monolayer of adsorbate molecules, in which a part of the molecule exhibits a special affinity for a substrate. SAMs may be created by the chemisorption, which in general is an adsorption characterized by a strong interaction between an adsorbate and a substrate surface (for instance from a vapor or liquid phase), the chemisorption being followed by a slow two-dimensional organization of adsorbate molecules. On metallic substrates, such as for instance gold, silver or platinum, areas of close-packed molecules may nucleate and grow until the substrate surface is covered by a single monolayer. Such a single monolayer may nucleate and grow also on dielectric substrates, such as for example glass or silicon oxide. Hence, a formation of a SAM on such substrates may proceed in a controlled manner from a disordered mass of adsorbate molecules or a "lying down phase", in which phase the adsorbate molecules are parallel to the substrate surface, to a highly ordered monolayer, for instance a thin film monolayer.

Self-assembled multilayer may be denoted a stack of organized monolayers of adsorbate molecules. Also a self-assembled multilayer may be formed in a controlled manner on substrates, such as for instance gold, silver, platinum, silicon oxide or glass. To this end, a first SAM is formed on a substrate as described above. After the first monolayer is formed, a controlled amount of copper ions may be supplied and positioned on the first SAM. The first SAM may need to be adapted properly for the positioning of the copper. The resulting copper layer may then be used as a binder on which a second SAM may form in the above described chemisorption process. Such a controlled formation of an additional SAM is possible because of the affinity of the adsorbate molecules to the copper. After the second monolayer is formed, again a controlled amount of copper ions may be supplied and positioned on the second SAM, and third SAM may be formed. Similarly, further SAMs may be formed in a controlled manner, until the desired number of monolayers in the stack is achieved.

The above mentioned metallic or dielectric substrate materials, on which self-assembled layers can be formed in a controlled manner (this means, for instance, with a well-defined number of layers, thickness, density, etc.), are too expensive or not-suitable for use in interconnect parts of advanced semiconductor integrated circuits.

Moreover, the above mentioned process of forming self-assembled multilayers in is rather complicated, expensive and time consuming. As such, it may present an additional difficulty for manufacturing of electronic devices based on self-assembled multilayer structures, which devices would be suitable for a monolithic integration in integrated circuits.

### OBJECT AND SUMMARY OF THE INVENTION

It is an object of the invention to provide for a system for manufacturing a self-assembled layer structure, the system allowing for a simple, low cost and high volume production of nano-structured material.

In order to achieve the object defined above, a method for manufacturing a self-assembled layer on a metal substrate, an arrangement of a self-assembled layer and a metal substrate, and an apparatus for manufacturing a self-assembled layer on a metal substrate according to the independent claims are provided.

According to an exemplary embodiment of the invention, a method for manufacturing a self-assembled layer on a metal substrate is provided, the method comprising providing the metal substrate (which may be a substrate consisting of metal or a substrate such as a semiconductor substrate having metal material on an exposed surface thereof), providing a solvent, providing a precursor for the self-assembled layer, preparing a mixture of the precursor and the solvent, contacting (for instance simultaneously with or subsequently to the mixing) the metal substrate with the mixture, and forming the self-assembled layer with controllable (or adjustable, for instance by adjusting materials, concentrations, external physical conditions, etc.) material properties on a surface of the metal substrate based on (i.e. using the material of) the precursor, wherein the metal substrate is configured for being ionized upon interacting with the mixture of the precursor and the solvent.

According to another exemplary embodiment of the invention, an arrangement of a self-assembled layer on a metal substrate manufactured by the above mentioned method is provided.

According to still another exemplary embodiment of the invention an apparatus for manufacturing a self-assembled layer on a metal substrate is provided, the apparatus comprising, a substrate provisioning unit for providing the metal substrate, a solvent provisioning unit for providing a solvent, a precursor provisioning unit for providing a precursor for the self-assembled layer, a preparation unit for preparing a mixture of the precursor and the solvent, a contacting unit for contacting the metal substrate with the mixture, and a formation unit for forming the self-assembled layer with controllable material properties on a surface of the metal substrate based on the precursor, wherein the metal substrate is configured for being ionized upon interacting with the mixture of the precursor and the solvent.

The term "self assembled layer" may particularly denote a "self-assembled monolayer" or a "self-assembled multilayer.

The term "self-assembled monolayer" (SAM) may particularly denote an organized monolayer of adsorbate molecules, which may be hydrophilic and/or hydrophobic, for instance amphiphilic, in which one part of the molecule, the "head part", may be, for instance, hydrophilic. The head part may show a special affinity for a substrate, the metal substrate according to this embodiment. The remaining part of the molecule may comprise a "tail part" at its terminal end, which tail part may be, for instance, hydrophobic. SAMs may be created by the chemisorption, which in general is an adsorption characterized by a strong interaction between an adsorbate and a substrate surface, of the head parts onto the metal substrate from either a vapor or liquid phase, followed by a slow two-dimensional organization of the tail parts. Initially, adsorbate molecules form a disordered mass of molecules or form a so called "lying down phase", in which phase the molecules are oriented in parallel to the substrate surface. Over a period of hours (for instance 1 to 72 hours) the adsorbate molecules may form crystalline or semicrystalline structures on the substrate surface. The head parts may assemble together on the substrate surface, while the tail parts may assemble away from the substrate. Areas of close-packed molecules may nucleate and grow until the substrate surface is covered by a single monolayer. Hence, the formation of a SAM may proceed from a disordered mass of molecules or a "lying down phase" to a highly ordered monolayer, for instance a thin film monolayer. The adsorbate molecules adsorb readily because they lower the surface energy of the substrate and are stable due to the strong chemisorption of the head parts. The corresponding bonds may create stable monolayers of a very accurate thickness. For example, thiol-metal bonds may be of the order of 100 kJ/mol, for example, 231 kJ/mol for a S-Cu (Sulfur-Copper) bond. This makes the bonds stable in a wide variety of temperatures, solvents and potentials. The SAM packs tightly due to van der Waals interactions, thereby reducing its own free energy. The adsorption can be described by the Langmuir adsorption isotherm if lateral interactions are neglected. If they cannot be neglected, the adsorption can be better described by the Frumkin isotherm.

The term self-assembled multilayer" (SAM) may particularly denote a stack of organized self-assembled monolayers of adsorbate molecules.

The term "metal substrate" may particularly denote a body (for instance a carrier body) comprising metal, in particular a layer structure comprising a metal layer. The term metal substrate may also refer to a metal surface of a body, for instance a surface of a planar metal layer or a structured metal layer, for instance, a nano-structured surface. The metal substrate may be provided using chemical vapor deposition (CVD), plasma enhanced chemical vapor deposition (PECVD), physical vapor deposition (PVD), atomic layer deposition (ALD), sputtering, etc.

The term "precursor" may particularly denote any material, compound or composition, comprising adsorbate molecules, which compound may participate in the chemisorption process leading to a formation of the self-assembled layer. More generally, a precursor may denote any material which provides the material which is used to constitute at least part of the self-assembled layer.

The term "solvent" may particularly denote any organic or inorganic substance in a, for instance, fluidic (more particularly liquid) phase, which is suitable to be mixed with the precursor so that when the mixture is brought into a contact with the metal substrate a self-assembled layer may be formed.

The term "mixture" may particularly denote, for instance a solution (such as, for example a dilute solution) of the precursor in the solvent, or any mixture of the precursor and the solvent in a fluidic phase, for instance, a vapor and/or liquid phase.

The term "contacting" may particularly denote immersing a substrate into a solution (for instance, a dilute solution) of the precursor and the solvent. However it may also particularly denote the process, in which in a reaction chamber the metal substrate is exposed to a vapor flow of the precursor and the solvent forming the mixture.

The term "material properties" may particularly denote mechanical properties, electrical properties, thermal properties, chemical properties, magnetic properties, optical properties, biological properties, etc. The material properties of the self-assembled layer may depend on the type of the adsorbate molecules, on the solvent, on the concentration of the adsorbate molecules in the mixture, on mechanical structure of the metal surface substrate, etc. Mechanical properties of the self-assembled layer may comprise thickness, number of layers, packing density of the adsorbate molecules, etc. For example, the electrical properties may particularly denote permittivity, conductivity, resistivity, etc. The optical properties may for example denote refractive properties, reflective properties, polarization properties, nonlinear properties, such as for example frequency doubling (second harmonic generation), etc. Biological properties may particularly denote an ability of tail parts capturing, catching and/or binding capturing organic particles, for instance, antibody molecules, protein molecules, oligonucleotide molecules, etc. Thermal properties may particularly denote thermal conductivity, thermal expansion, etc. Chemical properties may particularly denote an ability of tail parts capturing, catching and/or binding molecules of water, gases, etc. Chemical properties may also denote an ability of the adsorbate molecules to react (in a reversible or irreversible way) with the captured particles. Here the term "particle" may particularly denote a molecule (for instance an inorganic molecule, an organic molecule), a biological particle (for instance DNA, RNA, a protein, an amino acid, a bacteria, a virus), a bead, a nano-bead, a nano-tube, etc.

Using the metal substrate for forming self-assembled layers may be of a particular importance for manufacturing of nano- and micro-devices integrated in semiconductor chips. Because of its CMOS compatibility and very low resistivity, metals are the most common electrode materials used in the interconnect parts of advanced semiconductor integrated circuits, where a reliable signal processing is of a particular importance. Therefore, it can be seen as a crucial advantage of the method of this exemplary embodiment of the invention that it allows for a controlled formation of the self-assembled layer on the metal substrate, particularly formation of the self-assembled layer with controllable material properties.

Hence, the manufacturing method may be very well suited for a simple, low cost and high volume production of nano-structured or micro-structured material for applications in nanoelectromechanical systems (NEMS) or microelectromechanical systems (MEMS).

Next, further exemplary embodiments of the method will be explained. However, these embodiments also apply to the arrangement and the apparatus.

A metal-free (for instance, a copper-free) solvent may be used; in particular an addition of metal ions for formation of a self-assembled multilayer may be avoided.

The method according to this exemplary embodiment of the invention allows that a self-assembled layer with thickness in a range between 0.5 nm and 10 nm can be formed. The thickness may be homogeneous over the self-assembled layer. As a consequence, the desired electrical, optical, thermal, chemical and/or biological properties of the self-assembled layer can be achieved with a very good accuracy.

According to an exemplary embodiment of the invention, the precursor comprises organic molecules, particularly organic molecules comprising a first functional group and a second functional group.

The term "functional group" may particularly denote any specific group of atoms within an organic molecule that are responsible for characteristic chemical reactions of this molecule. The same functional group may undergo the same or similar chemical reaction (or reactions) regardless of the size of the molecule it is a part of. However, relative reactivity of a given functional can be modified by nearby functional groups.

The head part and/or the tail part may comprise the first and/or the second functional groups. The functional groups may be advantageous in order to guarantee desired properties of the head parts and the tail parts of the adsorbate molecules. In particular, a proper chemisorption of the head parts onto the metal substrate and a proper two-dimensional organization of the tail parts may be achieved due to the functional groups, resulting in a well-defined thickness and/or density of the resulting self-assembled layer. As a result, the desired mechanical, electrical, optical and/or thermal properties can be achieved in a controllable manner. Further, due to the functional groups being present, also the desired material properties, for instance, chemical and/or biological properties of the self-assembled layer may be achieved in a controlled manner. This is because the functional group of the tail part may, for example, determine the ability of the self-assembled layer to catch, bind and/or capture particles in an environment, and react with these. Such an event may in turn result in a corresponding change, for instance, of the electrical properties of the self-assembled layer, which change may advantageously used as an indicator of a presence of the particles in the environment.

According to an exemplary embodiment of the invention, at least one of the first and the second functional group comprises one of a carboxylic group, an amino group, a phosphate group and a sulfhydryl group. Such functional groups may advantageously be used in combination with the metal substrate because these functional groups have a particularly strong tendency to bind to the metal substrate. For example, thiol-copper bond may be as much as 231 kJ/mol. Therefore, these functional groups may be used in order to assure the desired wetting and interface properties of the precursor. Hence, the carboxylic, amino, phosphate and/or sulfhydryl functional groups may be optimally suited for forming stable self-assembled layers of very accurate thicknesses, number of layers and/or density. For instance, the head part and the tail part both may comprise the carboxylic group. Alternatively, the head part and the tail part both may comprise the sulfhydryl group, the amino group or the phosphate group. As further alternatives, the head part may comprise the carboxylic group and the tail part may comprise the sulfhydryl group or vice versa. Analogously, other combinations of functional groups are possible. The sulfhydryl group may be also referred to as a thiol group.

According to an exemplary embodiment of the invention, the precursor comprises one of the group consisting of an alkane, an alkene, an alkyne, an aromatic, a halide, an ether, an alcohol, an aldehyde, a carboxylic acid, an amide, an ester, an amine and a nitrile, particularly a modified alkane, a modified alkene, a modified alkyne, a modified aromatic, a modified halide, a modified ether, a modified alcohol, a modified aldehyde, a modified carboxylic acid, a modified amide, a modified ester, a modified amine and a modified nitrile. Such organic materials (for instance, the above mentioned organic compounds comprising, in their non-modified parts, a number of carbon atoms in a range between 3 and 25, particularly between 7 and 21, more particularly between 10 and 17) modified by adding functional groups, such as the carboxylic groups, the amino groups, the phosphate groups and/ or the sulfhydryl groups to their terminal ends may be used advantageously, because of their characteristic wetting and interface properties. Because of these properties strong and stable bonds in a wide variety of temperatures, solvents and potentials may be formed between the head parts and the metal substrate. Also an optimal two-dimensional organization of the tail parts can be achieved due to the characteristic wetting and interface properties of the modified alkanes.

According to an exemplary embodiment of the invention, the precursor comprises one of the group consisting of a mercaptoalkanoic acid (SH-R-COOH), a diamine (R-(NH₂)₂), an amino acid (NH₂-R-COOH), an aminothiol (NH₂-R-SH), an amino phosphonic acid (NH₂-R-H₂PO₃), an dicarboxylic acid (R-(COOH)₂), a phosphono carboxylic acid(H₂PO₃-R-COOH), an alkanedithiol (R-(SH)₂), a phosphono thiol (H₂PO₃-R-SH) and a diphosphonate R-(H₂PO₃)₂). For example, the precursor may comprise 11-mercaptoundecanoic acid and/or dodecanedioic acid. The above described characteristic properties of organic materials modified by functional groups may be used even more advantageously by using, for instance, the above mentioned organic compounds comprising, in their non-modified parts, a number of carbon atoms in a range between 3 and 25, particularly between 7 and 21, more particularly between 10 and 17). Precursors comprising a mercaptoalkanoic acid, a diamine, an amino acid, an aminothiol, an amino phosphonic acid, an dicarboxylic acid, a phosphono carboxylic acid, an alkanedithiol, a phosphono thiol or a diphosphonate may be particularly well suited for the controlled formation of self-assembled layer on the metal substrate.

According to an exemplary embodiment of the invention, the metal substrate comprises one of the group consisting of aluminum, lead, magnesium and a transition metal, the transition metal particularly being cobalt, zinc, mercury, nickel, iron or zirconium. Using these particular metal substrates for forming self-assembled layers may be of a particular advantage for manufacturing of nano- and micro-devices integrated in semiconductor chips. For example, because of its CMOS compatibility and very low resistivity, copper is the most common electrode materials used in the interconnect parts of advanced semiconductor integrated circuits, where a reliable signal processing is of a particular importance. The term "transition metal" may particularly denote any metal of the groups 3 to 12 of the periodic table.

According to an exemplary embodiment of the invention, the self-assembled layer is a monolayer. For some applications, depending for instance on the desired material properties, it may be of importance to form in a controlled way a single self-assembled monolayer. In this respect, with this exemplary embodiment of the invention it is possible to overcome possible problems, which may occur when a metal substrate is used for formation of a self-assembled monolayer. The above mentioned possible problems may occur because both the head parts as well the tail part of adsorbate molecules may have a strong tendency to bind to metal. Moreover, the head parts (for instance, head parts comprising carboxylic groups) may dissolve metal from the substrate and hence supply metal ions to the mixture of the precursor and the solvent. The dissolved metal ions may then bind to the tail groups of the adsorbate molecules and hence form a binder layer for further adsorbate molecules. Therefore in presence of a metal substrate the adsorbate molecules have a strong tendency to form a self-assembled multilayer, which is difficult to control. It may be seen as an advantage of this exemplary embodiment that a self-assembled monolayer can be formed in a controlled manner on the metal substrate.

According to an exemplary embodiment of the invention, the self-assembled layer is a multilayer. For some applications, depending for instance on the desired material properties, it may be of importance to form in a controlled manner a self-assembled multilayer (stack of monolayers) with a predetermined number (for example between 2 and 5) depending in a controllable manner on the concentration) of monolayers in the stack. As already mentioned above, in presence of a metal substrate the adsorbate molecules may have, due to the above mentioned presence of the dissolved metal ions, a strong tendency to form a self-assembled multilayer in a way which may be difficult to control, in particular it may be difficult to control the number of monolayers in the stack and/or their packing density. This exemplary embodiment of the inventions allows for using the above mentioned dissolved metal ions to form a binder layer for further adsorbate molecules in a controlled manner, hence, turning a possible disadvantage into an advantage. It may be seen as an advantage of this exemplary embodiment that a self-assembled multilayer layer can be manufactured on a metal substrate with controllable material properties on the metal substrate. Such a formation of a self-assembled multilayer allows advantageously avoiding any addition of metal ions to the solvent and/or to the mixture for forming further monolayers in the multilayer stack. Also, only functional groups (for instance sulfhydryl and/or amino groups) which do not dissolve metal ions from the substrate may be used. In this case an acidic compound (for instance a carboxylic acid) may be added into the mixture 112 in order to dissolve copper.

According to an exemplary embodiment of the invention, a concentration of the precursor in the mixture is less than approximately 1 mmol/l, in particular is in a range between approximately 0,5 mmol/l and approximately 1 mmol/l. With these concentrations of the precursor (for instance, of the adsorbate molecules) formation of a homogenous self-assembled monolayer can be carried out and the desired electrical, optical, thermal, chemical and/or biological properties of the self-assembled monolayer layer can be achieved with a very high accuracy. Here and in the sequel term "homogeneous" used in connection with a self-assembled monolayer may particularly denote homogeneity and/or regularity in the thickness, packing density, etc. The homogeneity may also denote particularly an absence or a negligible occurrence of impurities, irregularities etc. When the precursor comprises a modified alkane, such as for example 11-mercaptoundecanoic acid or dodecanedioic acid the method is very flexible as far the possible solvents are concerned.

According to an exemplary embodiment of the invention, the concentration of the precursor in the mixture is higher than approximately 10 mmol/l. With these concentrations of the precursor (for instance, of the adsorbate molecules) formation of a homogenous self-assembled multilayer (stack of monolayers) with a predetermined number of monolayers in the stack can be carried out and the desired electrical, optical, thermal, chemical and/or biological properties of the self-assembled multilayer can be achieved with a very high accuracy. Here and in the sequel term "homogeneous" used in connection with a self-assembled multilayer may particularly denote homogeneity and/or regularity in the thickness, number of monolayers in the stack forming the multilayer, packing density, etc. The homogeneity may also denote particularly an absence or a negligible occurrence of impurities, irregularities etc. When the precursor comprises a modified alkane, such as for example 11-mercaptoundecanoic acid or dodecanedioic acid the method is very flexible as far the possible solvents are concerned.

According to an exemplary embodiment of the invention, the concentration of the precursor in the mixture is in a range between approximately 1mmol/l and approximately 10 mmol/l. With these concentrations of the precursor (for instance, of the adsorbate molecules) both formation of a homogenous self-assembled monolayer and formation of a homogeneous multilayer can be carried with the desired electrical, optical, thermal, chemical and/or biological properties. Whether a homogeneous monolayer or a homogeneous multilayer will be formed may depend, in a controlled manner, on the solvent used.

According to an exemplary embodiment of the invention, the solvent comprises one of the group consisting of ethanol, degassed ethanol, toluene, acid, 2-propanol, heptane and de-ionized water. These solvents and their mixtures may advantageously be used particularly to form mixtures with predetermined concentrations of adsorbate molecules comprising functional groups, such as for example carboxylic groups, amino groups, phosphate groups and/or sulfhydryl groups. In particular, these solvents may advantageously be used to form mixtures with predetermined concentrations of the above mentioned organic materials modified by the above mentioned functional groups. For example, a self-assembled layer based on 11-mercaptoundecanoic acid and/or dodecanedioic acid may be formed. In this case, for instance, to form a self-assembled monolayer ethanol, degassed ethanol, and toluene may be used, in which case the concentration of the precursor in the mixture may be, for example, less than 1 mmol/l, in particular in a range between approximately 0,5 mmol/l and approximately 1 mmol/l.

Further, to form in this case a self-assembled monolayer, for instance, a solvent comprising ethanol and degassed ethanol may be used, in which case the concentration of the precursor in the mixture may be, for example, between approximately 1 mmol/l and approximately 10 mmol/l.

For instance, to form in this case a self-assembled multilayer a solvent comprising ethanol, degassed ethanol, and toluene may be used, in which case the concentration of the precursor in the mixture may be, for example, higher than 10 mmol/l.

Further, to form in this case a self-assembled multilayer, for instance, a toluene may be used as solvent, in which case the concentration of the precursor in the mixture may be, for example, between 1 mmol/l and 10 mmol/l.

According to an exemplary embodiment of the invention, the method further comprises adapting the self-assembled layer on the metal substrate as a sensor.

The term "sensor" may particularly denote any device which may be used for the detection of an analyte. Examples for sensors which may be realized according to this exemplary embodiment are gas sensors, smoke sensors, biosensors, pH sensors, humidity sensors, etc.

The term "humidity sensor" may particularly denote any device which may be used for the detection of an analyte comprising liquid particles such as water particles. For example, the humidity sensor may be use to detect water vapor, in an air-water mixture. A humidity sensor may be used, for example, to measure humidity, i.e. an amount of a water vapor in the air. A humidity sensor may combine an interactive component (for instance capture particles at or in the self-assembled layer capable of detecting particles, such as water molecules) with a physicochemical or physical detector component (for instance a capacitor having an electric characteristic which is modifiable by a sensor event). The term "humidity" may in particular denote an absolute humidity, a mixing ratio or a humidity ratio, a relative humidity, and/or a specific humidity of a gas-liquid mixture such as an air-water mixture.

The term "gas sensor" may particularly denote any device which may be used for the detection of an analyte comprising gas particles. For example, the gas sensor may be used for the selective detection of a gas, for example, in a gas mixture. A gas sensor may combine an interactive component (for instance capture particles at or in the self-assembled layer capable of detecting particles, such as gas molecules) with a physicochemical or physical detector component (for instance a capacitor having an electric characteristic which is modifiable by a sensor event).

The term "biosensor" may particularly denote any device which may be used for the detection of an analyte comprising biological particles such as DNA, RNA, proteins, oligonucleotides, enzymes, cells, bacteria, viruses, etc. A biosensor may be used, for example, to measure a concentration of bio-particles in a fluidic sample comprising biological material. A biosensor may combine a biological component (for instance capture particles at or in the self-assembled layer capable of detecting bioparticles) with a physicochemical or physical detector component (for instance a capacitor having an electric characteristic which is modifiable by a sensor event). The biosensor may be, for example a capacitive sensor device with the self-assembled layer forming a dielectric layer of a capacitor. For instance, the tail parts of the adsorbate molecules in the self-assembled layer may catch, capture, and/or bind antibodies, which antibodies may further catch, capture and/or bind target proteins or oligonucleotides. Catching, capturing and/or binding of the target protein or the target oligonucleotide may represent a sensor event. As a result of such a sensor event, dielectric properties of the self-assembled layer may change in a characteristic and reproducible manner. Hence, due to a presence of particles to be detected (such as for example target proteins or oligonucleotides) the capacitance of the capacitor can change correspondingly. The change of the capacitance indicating a sensor event can be detected and a corresponding electric signal indicative of the sensor event from the sensor device, particularly an electric sensor signal indicative of a sensor event, can be supplied to a periphery device. Hence, a very reliable and accurate sensor device can be provided for.

Also a humidity sensor or a gas sensor using self-assembled layer on the metal substrate may be adapted as a capacitive sensor device. However, a sensor device using self-assembled layer on the metal substrate may be adapted also a resistive sensor device, with a resistivity depending on the concentration of particles to be detected.

According to an exemplary embodiment of the invention, the method further comprises manufacturing the self-assembled layer on the metal substrate as a part of a monolithically integrated circuit. In this manner a MEMS or a NEMS device (for example, the above described sensor device) may be adapted as a sensor chip, particularly as a sensor chip manufactured in CMOS technology. CMOS technology, particularly the latest generation thereof, allows manufacturing structures with very small dimensions. A CMOS process may be a preferred choice. The MEMS or NEMS device may be monolithically integrated on the basis of a semiconductor substrate, particularly comprising one of the group consisting of a group IV semiconductor (such as silicon or germanium), and a group III-group V semiconductor (such as gallium arsenide). The MEMS or NEMS device may be formed starting with a purely crystalline silicon wafer or an SOI wafer (Silicon On Insulator). The metal substrate can be formed as one or more nanoelectrodes. When the metal substrate is used a part of a nanoelectrode or if the metal substrate comprises a nanoelectrode, the dimensions of the electrode may be in the order of magnitude of nanometers, for instance may be less than 300 nm, for instance may be less or equal than 250 nm, or may be less or equal than 130 nm. For example, in case of a sensor device, the closer the size of the nanoelectrodes to the size of particles to detect is, the more sensitive the resulting sensor can be. MEMS or NEMS devices compatible with advanced CMOS technology are easy to integrate in IC circuits at low costs in a high volume production. In particular such MEMS or NEMS devices can be easily integrated in arrays (for instance sensor arrays) integrated in a chip. This means that the MEMS or NEMS devices can advantageously be combined with other MEMS or NEMS devices. For example, sensor devices can be combined, for instance, with a pH sensor, a CO₂ sensor, etc. in a chip manufactured in CMOS. Such a chip can advantageously comprise also all necessary control loops.

Hence, for instance, in case of a sensor device the device may be a part of a multifunctional sensor device (for instance, a sensor array), a sensor readout device, a lab-on-chip, a sample transport device, a sample mix device, a sample washing device, a sample purification device, a sample amplification device, a sample extraction device or a hybridization analysis device.

The providing of the metal substrate may comprise patterning of the metal substrate surface.

Embodiments of the invention are not bound to specific materials, so that many different materials may be used. For conductive structures, it may be possible to use metallization structures (for instance on the basis of metal), silicide structures or polysilicon structures. For semiconductor regions or components, crystalline silicon may be used. For insulating portions, silicon oxide or silicon nitride may be used.

Any process technologies like CMOS, BIPOLAR, BICMOS may be implemented. Micro- and nano-technologies like lithography, etch or deposition techniques may be implemented.

Next, further exemplary embodiments of the apparatus will be explained. However, these embodiments also apply to the method and the arrangement.

The apparatus may further comprise a control unit to control the concentration of the precursor in the solvent. The control unit may also be used in order to control the temperature of the mixture and the time of the formation of the self-assembled layer.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a method for manufacturing of a self-assembled layer on a copper substrate according to an exemplary embodiment of the invention.
Fig. 2a illustrates a self-assembled monolayer on a copper substrate according to an exemplary embodiment of the invention.
Fig. 2b illustrates a self-assembled multilayer on a copper substrate manufactured according to an exemplary embodiment of the invention.
Fig. 3a to Fig. 3c illustrate a set of atoms constituents forming a self-assembled monolayer according to an exemplary embodiment of the invention.
Fig. 4 illustrates in a cross-sectional view a self-assembled layer on a copper substrate adapted as a sensor according to an exemplary embodiment of the invention.

### DESCRIPTION OF EMBODIMENTS

The illustration in the drawing is schematical. In the following description of the figures only a reference to a copper substrate will be made. However any metal of the group consisting of aluminum, lead, magnesium and a transition metal (any metal of the group 2 to 12 of the periodic table such as, for instance, cobalt, zinc, mercury, nickel, iron or zirconium) may be used.

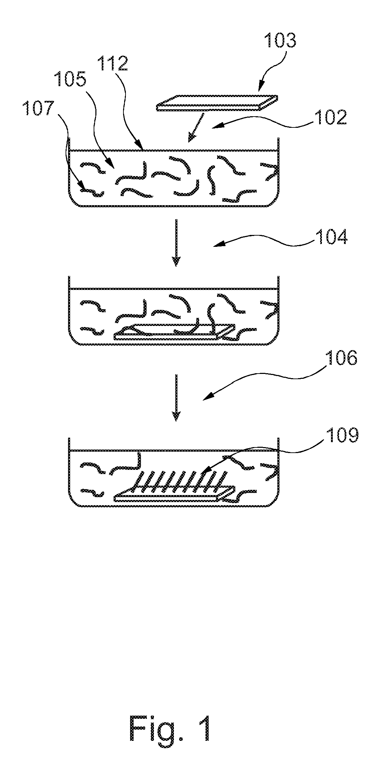

**Fig. 1** illustrates a method for manufacturing of a self-assembled layer on a copper substrate according to an exemplary embodiment of the invention. The manufacturing process comprises (in an arbitrary order) providing the copper substrate 103, providing a solvent 105 and providing a precursor 107. The copper substrate may be formed, for example, as a copper layer covering at least partially a Si substrate. The solvent 105 is an organic or inorganic substance in a, for instance, fluidic (more particularly liquid) phase, which is suitable to dissolve the precursor 107, in particular the solvent 107 is a copper-free solvent comprising ethanol, degassed ethanol, toluene, acid, 2-propanol, heptane and/or de-ionized water. The precursor 107 comprises adsorbate molecules, for instance modified alkane molecules. Modified alkanes, such as for instance 11-mercaptoundecanoic acid (MUA, HS-(CH₂)10-COOH) or a dodecanedioic acid (HOOC-(CH₂)₁₀-COOH) can be used. However, also other precursors (based, for instance, on alkanes, alkenes, alkynes, aromatics, halides, ethers, alcohols, aldehydes, carboxylic acids, amides, esters, amines and nitriles) comprising adsorbate molecules with functional groups (for instance, carboxylic, amino, phosphate and/or sulfhydryl groups) can be used. After the solvent 105 and the precursor are 107 are provided a mixture 112 (for instance a dilute solution) of the precursor 107 and the solvent 105 is prepared. For example, if the area of the surface of the copper substrate 103 exposed to the mixture 107 is 1 cm² then the amount of the mixture 107 may be 10 ml. A contacting of the copper substrate 103 and the mixture 112 may be performed through an immersion 102 of the copper substrate 103 into the mixture 112. After contacting of the copper substrate 103 with the mixture 112, a self-assembled monolayer layer 109 is formed by the chemisorption, which is an adsorption 104 characterized by a strong interaction between the precursor and the substrate surface, of head parts (for instance head parts comprising a carboxylic, amino, phosphate or sulfhydryl functional group) of adsorbate molecules onto the copper substrate immersed in the mixture 112. The adsorption 104 is followed by a slow two-dimensional organization 106 of tail parts (for instance tail parts comprising a carboxylic, amino, phosphate or sulfhydryl functional group) of molecules, in which organization 106 the originally disordered adsorbate molecules form crystalline or semicrystalline structures on the copper substrate surface 103 over a period of hours. The head parts assemble together on the substrate surface, while the tail parts assemble away from the substrate 103. Areas of close-packed adsorbate molecules nucleate and grow until the substrate surface is covered in a highly ordered single monolayer 109. In course of the formation of the self-assembled monolayer 109 the head parts of the adsorbate molecules, carboxylic groups dissolve copper from the substrate 103 and hence supply copper ions to the mixture of the precursor and the solvent. In case when only functional groups (for instance sulfhydryl, and/or amino groups) are used which do not dissolve copper ions from the substrate 103 an acidic compound (for instance a carboxylic acid) is added into the mixture 112 in order to dissolve copper. The dissolved copper ions bind to the tail parts of the adsorbate molecules forming the self-assembled multilayer. In case that a self-assembled monolayer is manufactured, a formation of a next self-assembled monolayer on the top of the copper ion bound on the self-assembled monolayer 109 is prevented due to a properly chosen concentration of the precursor in the solvent and properly chosen physical conditions for the forming the self-assembled layer (for instance, formation time and temperature, the formation time being between 30 minutes and 12 hours, particularly between 1 hour and 3 hours and the temperature being between 20°C and 30°C). Hence, due to the concentration and the physical conditions (for instance, formation time and temperature) properly chosen a formation of a self-assembled multilayer may be prevented and only a self-assembled monolayer may be formed. For example, to form a self-assembled monolayer using a 11-mercaptoundecanoic or a dodecanedioic acid as precursor, for instance, ethanol, degassed ethanol, and toluene may be used, in which case the concentration of the precursor in the mixture is less than 1 mmol/l, in particular in a range between 0,5 mmol/l and 1 mmol/l. However, when ethanol and degassed ethanol are used as solvents a self-assembled monolayer based on a 11-mercaptoundecanoic or a dodecanedioic acid will be formed also at higher concentrations, in particular at concentrations in range between 1 mmol/l and 10 mmol/l.

In case a self-assembled multilayer is manufactured, a second self-assembled monolayer on the top of the copper atoms positioned due to the above described mechanism on the self-assembled monolayer 109 will be formed. This formation process can be continued in a controlled manner until the desired number of self-assembled monolayers in the self-assembled multilayer will be achieved. In order to form a self-assembled multilayer using a 11-mercaptoundecanoic or a dodecanedioic acid as precursor , for instance, ethanol, degassed ethanol, and toluene may be used, in which case the concentration of the precursor in the mixture is higher than 10 mmol/l. However, when toluene is used as solvent a self-assembled monolayer based on a 11-mercaptoundecanoic or a dodecanedioic acid will be formed also at lower concentrations, in particular at concentrations in range between 1 mmol/l and 10 mmol/l.

In each case washing off to remove excess mixture may be performed at the end of the formation process.

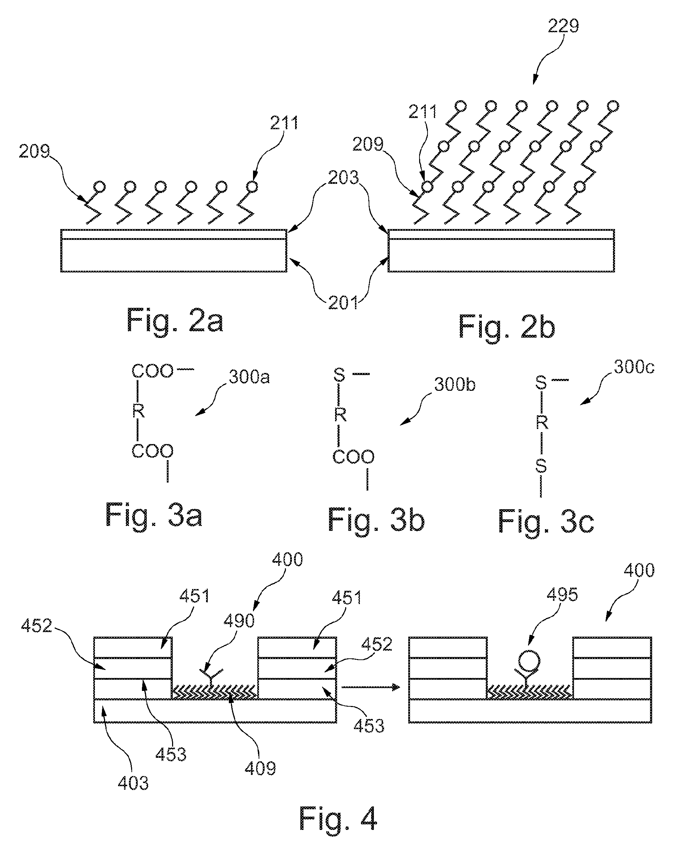

**Fig. 2a** illustrates a self-assembled monolayer on a copper substrate manufactured according to an exemplary embodiment of the invention.

The self-assembled monolayer 209 on the copper substrate formed by a copper layer 203 covering a Si substrate 201 is manufactured by the method described above in relation to Fig.1. As explained above, copper ions 211 dissolved from the copper layer 203 are bound to the tail parts of adsorbate molecules forming the self-assembled monolayer. The thickness of the self-assembled monolayer can be in a range between and 0.5 nm and 3 nm.
**Fig. 2b** illustrates a self-assembled multilayer on a copper substrate manufactured according to an exemplary embodiment of the invention. The self-assembled multilayer comprises a stack of self-assembled monolayers 209 bound together by copper ions 211. The self-assembled multilayer 229 is manufactured on the copper substrate formed by a copper layer 203 covering a Si substrate 201 using the method described above in relation to Fig.1. The number of self-assembled monolayers in the self-assembled multilayer 229 may be between 2 and 5.
**Fig. 3a** to **Fig. 3c** illustrate a set of constituents forming a molecule of a self-assembled monolayer according to an exemplary embodiment of the invention. Fig. 3a illustrates constituents forming a molecule 300a of a self-assembled monolayer based on an alkane (R) functionalized by two carboxylic groups. Fig. 3b illustrates constituents forming a molecule 300b of a self-assembled monolayer based on an alkane (R) functionalized by one sulfhydryl group and by one carboxylic group. Fig. 3c illustrates constituents forming a molecule 300c of a self-assembled monolayer based on an alkane (R) functionalized by two sulfhydryl groups. In each case a COO part of a carboxylic group COOH and/or a sulfur atom S of the sulfhydryl group SH bind to the copper substrate and/or to the copper ions dissolved from the copper substrate and positioned on the tail parts. More generally the constituent R in Fig. 3a to Fig. 3c may, instead of an alkane, also represent an alkene, an alkyne, an aromatic, a halide, an ether, an alcohol, an aldehyde, a carboxylic acid, an amide, an ester, an amine or a nitrile. The number of carbon atoms in the constituent R may be in the range between 3 and 31, particularly between 7 and 21, more particularly between 10 and 17. Also, not only carboxylic groups (COOH-) and/or sulfhydryl groups (SH-) may be used. Amino (NH₂-) and phosphate groups (H₂PO₃-) may be used as well.
**Fig. 4** illustrates in a cross-sectional view a self-assembled layer on a copper substrate adapted as a sensor according to an exemplary embodiment of the invention. The sensor 400 is an example of a capacitive biosensor. The biosensor 400 may be integrated in a chip (not shown). The copper substrate 403 forms the lower electrode of a capacitor further formed by an upper electrode 452, dielectric layer 453 and a self-assembled monolayer 409. Alternatively, depending, for example, on the desired sensitivity, on the bioparticles to be detected, on the environment in which the biosensor is assumed to be used, etc. also a self-assembled multilayer may be used. The upper electrode 452 may be covered by an insulating layer 451. An antibody 490 caught, captured or bound by a tail part of the self-assembled monolayer 409 is shown on the left hand side of the Fig. 4. On the right hand side of Fig. 4 the antibody 490 with a caught, captured and/or bound bioparticle 495 (for instance a target protein) is shown. Catching, capturing and/or binding of the bioparticle 495 represent a sensor event. As a result of such a sensor event, dielectric properties of the self-assembled layer will change in a characteristic and reproducible manner. Hence, due to a presence of bioparticles to be detected (such as for example target proteins) the capacitance of the capacitor can change correspondingly. The change of the capacitance indicating a sensor event can be detected and a corresponding electric signal indicative of the sensor event from the sensor device, particularly an electric sensor signal indicative of a sensor event, can be supplied to a periphery device. Hence, a very reliable and accurate sensor device can be provided for. Similarly, other bioparticles (for instance DNA, RNA, proteins, enzymes, cells, bacteria, viruses, oligonucleotides, etc.) can be detected too. The sensor device 400 may comprise also a heater and/or a temperature sensor (not shown), which may be integrated, for instance, in a chip substrate (not shown).

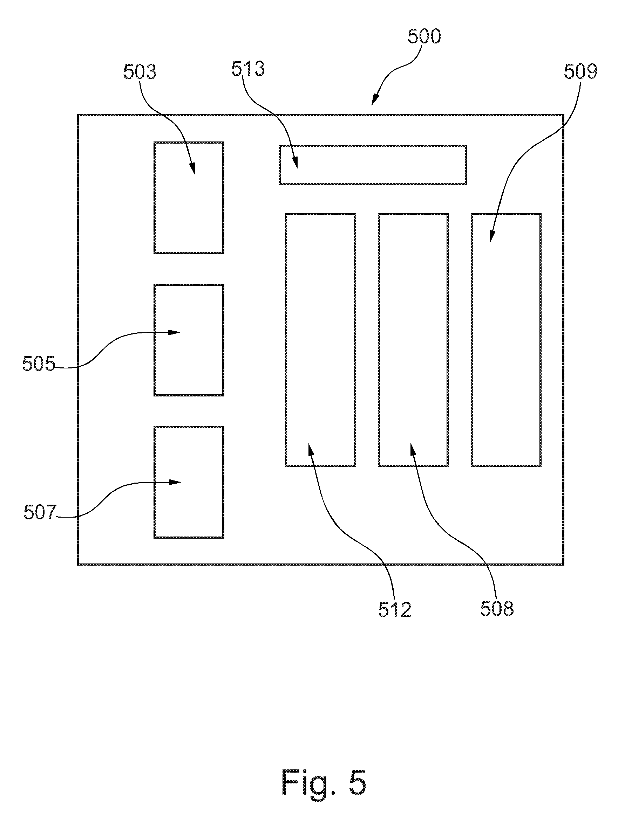

**Fig. 5** illustrates an apparatus for manufacturing a self-assembled layer on a copper substrate according to an exemplary embodiment of the invention. The apparatus comprises a substrate provisioning unit 503 for providing the copper substrate, a solvent provisioning unit 505 for providing a solvent, a precursor provisioning unit 507 for providing a precursor for the self-assembled layer, a preparation unit 512 for preparing a mixture of the precursor and the solvent, a contacting unit 508 for contacting the copper substrate with the mixture, and a formation unit 509 for forming the self-assembled layer with controllable material properties on a surface of the copper substrate based on the precursor. A control unit 513 to control the concentration of the precursor, time of the formation and temperature as well as other physical conditions within the formation unit may be a part of the formation unit 509 or a separate unit.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. A method for manufacturing a self-assembled layer (109) on a metal substrate (103), the method comprising
providing the metal substrate (103),
providing a solvent (105),
providing a precursor (107) for the self-assembled layer (109),
preparing a mixture (112) of the precursor (107) and the solvent (105), contacting (102) the metal substrate (103) with the mixture (112), and
forming (104, 106) the self-assembled layer (109) with controllable material properties on a surface of the metal substrate (103) based on the precursor (107), wherein the metal substrate (103) is configured for being ionized upon interacting with the mixture (112) of the precursor (107) and the solvent (105).

2. The method of claim 1, wherein the precursor (107) comprises organic molecules, particularly organic molecules comprising a first functional group and a second functional group.

3. The method of claim 2, wherein at least one of the first and the second functional group comprises one of a carboxylic group, an amino group, a phosphate group and a sulfhydryl group.

4. The method of claim 1, wherein the precursor comprises one of the group consisting of an alkane, an alkene, an alkyne, an aromatic, a halide, an ether, an alcohol, an aldehyde, a carboxylic acid, an amide, an ester, an amine and a nitrile, particularly a modified alkane, a modified alkene, a modified alkyne, a modified aromatic, a modified halide, a modified ether, a modified alcohol, a modified aldehyde, a modified carboxylic acid, a modified amide, a modified ester, a modified amine and a modified nitrile.

5. The method of claim 1, wherein the precursor comprises one of the group consisting of a mercaptoalkanoic acid, a diamine, an amino acid, an aminothiol, an amino phosphonic acid, an dicarboxylic acid, a phosphono carboxylic acid, an alkanedithiol, a phosphono thiol and a diphosphonate.

6. The method of claim 1, wherein the metal substrate comprises one of the group consisting of aluminum, lead, magnesium and a transition metal, the transition metal particularly being cobalt, zinc, mercury, nickel, iron or zirconium.

7. The method of claim 1, wherein the self-assembled layer is one of a monolayer and a multilayer (229).

8. The method of claim 1, wherein a concentration of the precursor (107) in the mixture (112) is less than 1 mmol/l, in particular is in a range between 0,5 mmol/l and 1 mmol/l.

9. The method of claim 1, wherein the concentration of the precursor (107) in the mixture (112) is higher than 10 mmol/l.

10. The method of claim 1, wherein the concentration of the precursor (107) in the mixture (112) is in a range between 1 mmol/l and 10 mmol/l.

11. The method of claim 1, wherein the solvent comprises one of the group consisting of ethanol, degassed ethanol, toluene, acid, 2-propanol, heptane and de-ionized water.

12. The method of claim 1, further comprising adapting the self-assembled layer on the metal substrate as a sensor (400), particularly as a biosensor.

13. The method of claim 1, further comprising manufacturing the self-assembled layer and the metal substrate as a part of a monolithically integrated circuit.

14. An arrangement of a self-assembled layer (109) on a metal substrate manufactured according to claim 1.

15. An apparatus for manufacturing a self-assembled layer (109) on a metal substrate (103), the apparatus comprising:
a substrate provisioning unit for providing the metal substrate (103),
a solvent provisioning unit for providing a solvent (105),
a precursor provisioning unit for providing a precursor (107) for the self-assembled layer (109),
a preparation unit for preparing a mixture (112) of the precursor (107) and the solvent (105),
a contacting unit for contacting (102) the metal substrate (113) with the mixture (112), and
a formation unit for forming (104, 106) the self-assembled layer (109) with controllable material properties on a surface of the metal substrate (103) based on the precursor (107),
wherein the metal substrate (103) is configured for being ionized upon interacting with the mixture (112) of the precursor (107) and the solvent (105).
